# EUROPEAN PATENT SPECIFICATION

(11) **EP 0 560 071 B1**
(45) Date of publication and mention of the grant of the patent: **23.08.2000**
(21) Application number: 93102105.9
(22) Date of filing: 05.06.1991
(51) Int. Cl.: H04B 3/56, H04L 27/20, H02J 13/00, H04L 5/06, H04L 5/14

(54) **Method of signalling**
Verfahren zum Abfragen von Stromzählern
Procédé d'interrogation de compteurs électriques

(30) Priority: 05.06.1990 GB 9012457; 01.02.1991 GB 9102199
(43) Date of publication of application: 15.09.1993
(62) Divisional of application: 91911484.3
(73) Proprietor: SIEMENS METERING LIMITED, Oldham, Lancashire OL9 7JS (GB)
(72) Inventor: Roberts, Lyn Mervyn, London SW20 0NW (GB); Cooper, David Edward, New Malden, Surrey KT3 3BU (GB); Stock, Kelvin Eric, Leatherhead, Surrey KT22 8TH (GB)
(74) Representative: Fish, Norman Ernest

(56) References cited:
- US-A- 3 710 373
- US-A- 3 967 058
- US-A- 4 514 840
- BULLETIN DES SCHWEIZERISHEN ELEKTROTECHNISCHEN VEREINS vol. 57, no. 9, 30 April 1966, Z}RICH, CH pages 423 - 429 D. BURGER 'Erfahrung mit Netzkommandoanlagen'

## Description

This invention relates to the transmission of digital signals by phase modulation of a carrier signal, the reception and demodulation of such phase modulated signals and the means by which such signals may be coupled to and from an electrical power distribution network.

In the field of electricity metering an economical and reliable means of signalling between a consumer's meter and the electricity supply industry's local distribution transformer would be of considerable benefit to the industry. Consumer meters would be read electronically and the meters would be monitored for reverse current, damage or interference. It would also be possible to control loads for individual consumers and to electronically collect half hourly meter readings.

However, the electrical power distribution network poses many difficulties to a practical signalling system. The signal levels that may be impressed upon the supply network will be subject to regulatory limits and economic limits because of cost and power consumption. The signal loss through the network is considerable and varies with the load on the network. Signals received from the network are contaminated with both broadband and narrowband noise and with incidental amplitude modulation induced by time varying impedances on the network. The coupling of signals to the network is complicated by the extreme variability of the network impedance from point to point and as a function of frequency and time.

Additionally, there are many attendant systems problems that must be addressed by a practical transceiver system. Since there is often little isolation at carrier frequencies between the phases of a low voltage distribution network, the transceiver at a distribution transformer is effectively connected to all the meters fed from that transformer on a single multidrop line. It is, therefore, necessary to co-ordinate the transmissions from the substation and the meters. This is most conveniently effected by polling the meters from the substation. However, it is common for sections of the low voltage distribution network to be connected to a plurality of substations. It is, therefore, necessary that there should be no mutual interference between the polling operations of interconnected substations. If the meter in a consumer's premises should fail in such a manner that it transmits continuously onto the network, this must not prevent the substation from communicating with the other meters and there must be some means of identifying which consumer's meter is faulty. If the signal loss between a substation and a meter is at any time too high to permit reliable direct communications between the substation and the meter, some means must be provided for the required communications to take place. This is most conveniently effected by transmitting the message to a meter and having this meter forward the message to another meter and in a like manner returning any reply from the destination meter. This process of onward linking can in principle be extended to any finite number of meters. The low voltage distribution network is itself subject to changes of topology, for example the distribution transformer feeding a particular section of the network may be changed for maintenance purposes, the signalling system must provide some means of coping with such changes.

It is well known that transmission of antipodal signals and demodulation of such signals with a coherent receiver provides the greatest possible immunity to gaussian noise. According to this technique the received signal is multiplied by one of the possible transmitted signals in each bit interval and the resultant signal is integrated over the bit interval to provide an estimate as to the bit that was transmitted. Since the possible transmitted signals and the bit timing are not otherwise available at the receiver it is necessary to reconstruct an estimate of these signals from the receive signal itself.

Complex phase modulated signals have long been recognised as a very efficient means of modulating a carrier, providing both high levels of immunity to noise and extremely narrow bandwidths. Complex phase modulated signals have commonly been produced by so called I and Q modulators in which the complex modulation is produced as a pair of baseband modulations which are then applied to a pair of modulators one of which is fed with the desired carrier signal and the other of which is fed with a carrier at the same frequency but in phase quadrature to the other carrier.

For complex modulations the I and Q baseband signals are commonly produced by means of lookup tables and digital to analog converters. The desired complex phase modulation is in practice approximated by a piecewise constant phase modulation.

The complex modulation is applied directly to a digital representation of the phase of a high frequency cater thus eliminating the baseband modulations entirely and the complex phase modulation can be approximated by a piecewise linear phase modulation thus increasing the accuracy of the approximation by matching the first derivative of the desired signal in each sample interval. In addition the system can be extended to approximate higher order derivatives of the desired signal.

The arrangement used for generating these complex phase modulated signals can equally well be used for demodulating such signals. This can provide a very economical realisation of a half duplex modem.

The phase space processor provides a means of integrating all the modem functions in one uniform architecture. This provides a means of producing BPSK and other more general forms of phase modulation with frequency agility. Frequency agility together with narrowband signalling provide a means of overcoming the aforementioned systems problems. The use of a multiplying DAC to multiply the received signal with a sampled data representation of a local oscillator provides high mixing performance and allows all the transceiver signal processing functions to be integrated on a single chip in a highly cost effective manner.

The phase space processor is also used as a phase lock loop for carrier and bit timing recovery providing a high performance and cost effective solution to these problems. The overall transmission of information to and from a particular substation is handled in an isochronous manner. This ensures that no time need be wasted to re-establish bit synchronisation on line turn around.

The signals are coupled to the power distribution network through a doubly terminated forth order filter network. This ensures that power can be efficiently coupled to a low impedance power distribution network over the frequency range of 40KHz to 90KHz without requiring an unrealistically large 50Hz blocking capacitor to achieve the requisite wide band coupling network. This provides a low impedance drive to the power distribution network. If all the meters on a power distribution network were to present such a low impedance at all times the result would be greatly increased attenuation of signals at frequencies in the passband of the coupling network.

The present coupling network overcomes this difficulty by using a relay to switch out of circuit the parallel resonant circuit and the terminating impedance when the transceiver is acting as a receiver. This switches the coupling network into a high impedance broadband coupling network.

The voltage that may be impressed upon a power distribution network is likely to be constrained by regulation. Nonetheless, it may be desirable to transmit at the specified limit irrespective of the impedance of the power distribution network. If the power distribution network were driven with a very low output impedance then the voltage delivered to the network would be substantially independent of the impedance of the network. For reasons that have been mentioned previously, it is not economically feasible to range for the coupling network to have a negligible impedance and the output impedance of the driver must therefore be lowered by means of negative feedback from the power distribution network.

This can obviously be achieved by means of a separate coupling network which is used to feed back the level of the signal on the power distribution network to the driver stage. This has the disadvantage that a separate coupling network is required. The need for a separate coupling network is obviated by measuring the magnitude and phase of the input impedance of the coupling network when it is terminated with the impedance of the power distribution network. From this impedance it is possible to derive the impedance of the power distribution network itself and hence to predict the level of drive signal required to achieve a given amplitude of signal on the power distribution network.

Binary Phase Shift Keying (BPSK) provides a practical means of generating antipodal signals. A BPSK transmission at 50 to 100 baud produces a signal with a bandwidth much less than the frequencies allocated to ESI metering applications in EN50065. This suggests a particularly convenient means of addressing the systems problems mentioned above. The allotted frequency spectrum can be divided into a number (for example 10 to 20) of separate frequency channels, and interference between connected substations can be avoided by frequency division multiplexing. In a similar manner, if a meter should fail in such a manner that it transmits on a channel and therefore disrupts communications on that channel, communications between the substation and the other meters can be re-established on an alternative channel. The information carrying capacity of the power distribution network, using the signalling means described above, can be increased by operating a plurality of transmitters on the same network simultaneously at different frequencies.

The phase space processor provides a particularly convenient means of generating a more general class of phase shift keyed signals than BPSK. This class of phase shift keyed signal, which may be termed Softened Phase Shift Keyed SPSK signals, provide a means of reducing the size of the sidebands of a BPSK signal. The reduction is effected by softening the phase transitions in the signal such that the signal phase slews by 180° over a period of time rather than jumping instantaneously. If the period during which the phase is slewed is small in relation to the bit period, the loss in performance of the data link with a coherent receiver is small.

Co-ordination of the bit timing of polling messages in a system where the group delay from the master polling station to the remote stations is small in comparison to the bit interval of the transmitted messages is advantageous in that it avoids a complete re-synchronisation of the bit timing on each message which allows the bit timing to be averaged over a number of received messages thus improving the accuracy of bit timing at the receiver. The transmitter does not require any mechanism for acquiring the bit timing of received messages and the line turn around delay can be reduced in high noise environments since no time is needed for bit synchronisation. The remote stations derive their bit timing from the bit timing of the master station and all transmissions from the remote stations are sent with the bit timing of their transmission in synchronism with the bit timing derived from the received message from the master. Since the group delay from the master to the remote is a small fraction of the bit interval, the master can approximate the bit timing of the received signal from each remote by the bit timing of its own transmitted signal. The accuracy of this approximation obviously depends on the ratio of the group delay from master to remote to the bit interval.

In operation on the low voltage distribution network, a typical bit interval of 10mS would compare with a round trip group delay of about 10µS so that the error in bit timing would be insignificant.

On the power distribution network it is common for sections of the network to be fed by a plurality of distribution transformers to maintain the supply should the supply from an individual transformer be interrupted for any reason. These interconnected networks can extend over considerable distances thus making it impractical to operate a polled data collection system from a single point on the interconnected network. In these circumstances it is desirable to operate a plurality of data collection systems for example a separate system for each distribution transformer or for each individual feed line from a distribution transformer. The individual data collection systems must not interfere with each other so that some means must be devised for separating the signals from one system from those of each of the other systems in the immediate vicinity. A particularly convenient way of separating the signals from each of the data collection systems is by means of frequency division multiplexing.

One advantage of this method of operation is that the effective data rate for a given method of transmission can be increased because the frequency multiplexed signals do not interfere with one another. The limitation to the increase in the effective data rate in this manner is set by the limits to the frequency spectrum available for the transmission.

The invention will now be described, by way of example only, by reference to the accompanying drawings, of which:
Figure 1 is a block diagram of a phase modulator,
Figure 2 is a block diagram of a phase space processor,
Figure 3 is a block diagram of a mains transceiver,
Figure 4 is a block diagram of a simplified phase space processor for half duplex operation,
Figure 5 is a block diagram of a phase space processor (PSP),
Figure 6 is a block diagram of a half duplex transceiver,
Figure 7 is a block diagram of a master station,
Figure 8 is a block diagram of a remote station,
Figure 9 is a schematic drawing of an interconnected electricity distribution network in which four separate substations labelled A, B, C, D each with a separate distribution transformer labelled 91, 92, 93, 94 feed eight electricity meters labelled K, L, M, N, P, Q, R, S.

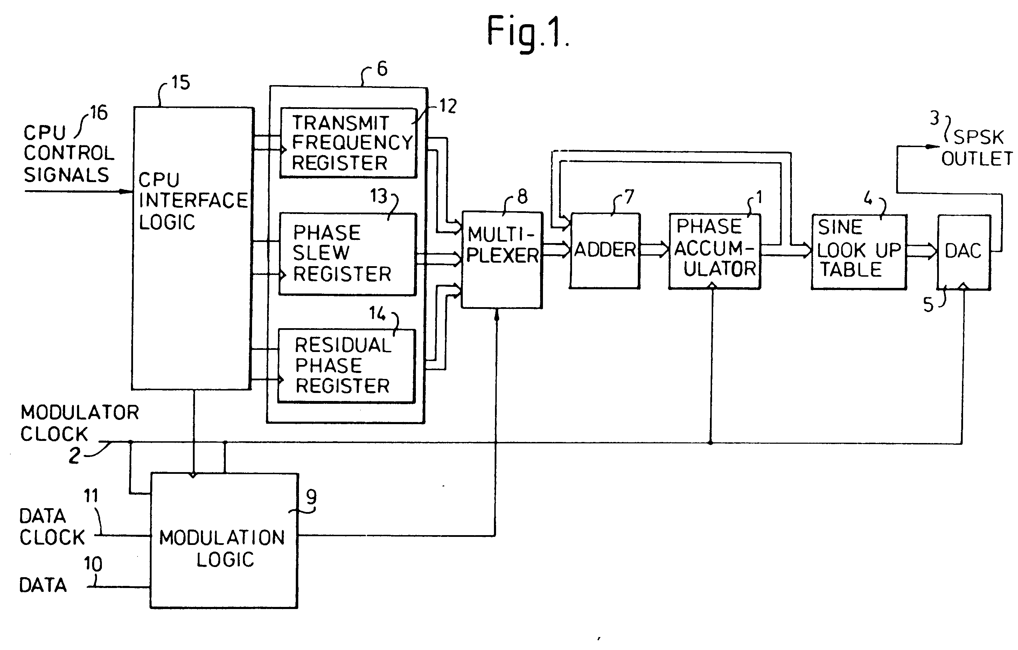

The phase modulator depicted in Figure 1 operates in the following manner.

The phase accumulator 1 is used to calculate the phase of the modulated signal at discrete intervals of time as set by the modulator clock 2. This discrete time phase information is translated into an instantaneous estimate of the desired signal 3 by means of a sine lookup table 4 and a Digital to Analog Converter (DAC) 5. This generates a sampled data representation of the modulated signal to an accuracy essentially determined by the performanced of the DAC 5.

The phase accumulator 1 advances in phase on each cycle of the modulator clock 2. On each cycle of the modulator clock 2 the contents of the phase accumulator 1 are added to the contents of one of the frequency registers within the frequency register bank 6 by the adder 7 and the result is returned to the phase accumulator 1. The multiplexer 8 selects one of the registers in the frequency register bank 6 under the control of the modulation logic 9.

The data input 10 to the modulator is clocked into the modulator by transitions on the data clock input 11. In the absence of transitions on the data clock input 11 the modulation logic 9 selects the transmit frequency register 12 from the frequency register bank 6 by means of the multiplexer 8 and the phase accumulator 1 is incremented by the contents of the transmit frequency register 12 on each cycle of the modulator clock 2. This causes the phase accumulator 1 to advance in phase at a constant rate which means that the output 3 is in a sine wave at a frequency set by the transmit frequency register 12.

The state of the data line 10 is sampled on each positive transition of the data clock input 11. If the sampled value is a zero, the modulation logic 9 takes no action. If, however, the sampled value is a one, the modulation logic 9 selects the phase slew register 13 as the source for the adder 7 for a number of cycles of the modulator clock 2 and then selects the residual phase register as the source for the adder 7 for one cycle of the modulator clock 2. The difference between the contents of the phase slew register 13 and the transmit frequency register 12 times the number of cycles of the modulator clock 2 for which this register is selected plus the difference between the residual phase register 14 and the transmit frequency register 12 is arranged to be exactly half of the cycle length of the phase accumulator 1. This ensures the phase of the register shifts by exactly 180°.

The transmit frequency register 12, the phase slew register 13 and the residual phase register 14 can be loaded from the CPU control signals 16 by means of the CPU interface logic 15. In addition, the CPU can load a register in the modulation logic 9 which controls the number of cycles for which the phase slew register 13 is selected. This allows the transmitter frequency and form of modulation to be changed under the control of an external processor.

In the preferred embodiment of the invention the modulator is subsumed in the phase space processor described below. In this embodiment it is possible to have a plurality of phase slew registers in place of the single phase slew register described above. The plurality of phase slew registers allow any phase modulation function consisting of piecewise linear phase slews to be synthesised subject only to the number of phase slew registers, together with their associated count registers, and the frequency of the modulator clock.

If the phase slew register 13 is not used and the 180° phase shift is effected in a single cycle with the residual phase register 14, the modulator produces a pure Binary Phase Shift Keyed (BPSK) signal. Pure BPSK modulation may of course be produced by inverting the most significant bit of the phase accumulator 1 whenever the data input 10 is a one before it is used as an address to the sine lookup table 4 which is the common technique for producing such modulation.

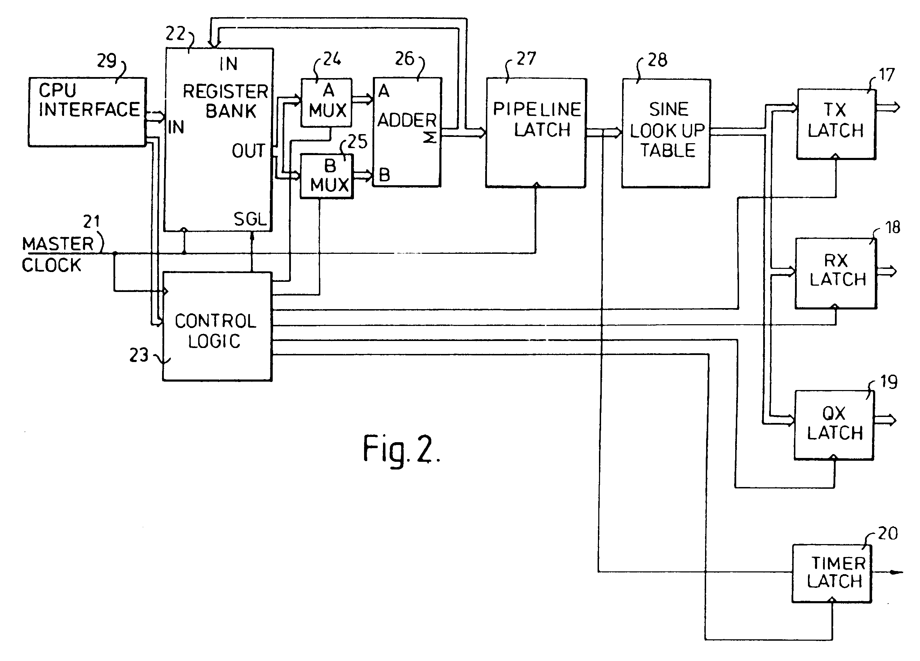

The phase space processor depicted in Figure 2 incorporates all the elements of the phase modulator shown in Figure 1 apart from the DAC 3. The sampled data representation of the modulated signal is available from the TX latch 17.

In addition the phase space processor generates a sampled data representation of the receiver local oscillator frequency which is available from the RM latch 18 and a sampled data representation of a signal in quadrature with the receiver local oscillator which is available from the QX latch 19. The phase space processor also generates a multiple of the bit frequency which is available from the timer latch 20.

All generated signals are derived from the master clock input 21. On each cycle of the master clock input 21 the contents of two of the registers in the register bank 22 are selected by the control logic 23 by means of the A multiplexer 24 and the B multiplexer 25 and applied to the inputs of an adder 26. The output of the adder 26 is loaded into one of the registers in the register bank 22 under the control of the control logic 23 and the most significant bits of the sum are also loaded into the pipeline latch 27. The output of the pipeline latch 27 forms the address of the sine lookup table 28. The output of the sine lookup table 28 is connected to the inputs of the TX latch 17, the RX latch 18 and the QX latch 19. The most significant bit of the pipeline latch 27 is connected to the input of the timer latch 20.

The control logic 23 clocks each of TX latch 17, the RX latch 18, the QX latch 19 and the timer latch 20 in turn on successive cycles of the master clock 21. The means by which the TX latch 17 is updated have been discussed previously. The modulator clock input 2 being clocked at a quarter of the rate of the master clock input 21 to allow the adder 7 and since lookup table 4 to be time shared for generating other signals.

The RX latch 18 is updated by means of two registers in the register bank 22, the receiver phase register and the receiver frequency register. On every forth cycle of the master clock 21 the contents of the receiver phase register and the receiver frequency register are added together and the result is returned to the receiver phase register at the same time the most significant bits of the result are loaded into the pipeline latch 27. On the next cycle of the master clock 21 the output of the sine lookup table 28 which reflects the sine of the phase contained within the receiver phase register on the previous cycle of the master clock 21 is loaded into the RX latch 18.

The QX latch 19 is updated by means of two registers in the register bank 22, the receiver phase register and the quadrature phase shift register. The quadrature phase shift register contains a one in its second most significant bit and a zero in all other bits. On every forth cycle of the master clock 21 the contents of the receiver phase register and the quadrature phase shift register are added together by the adder 26 and the most significant bits of the result are loaded into the pipeline latch 27. On the next cycle of the master clock 21 the output of the sine lookup table 28 which reflects the cosine of the phase contained within the receiver phase register on the previous cycle of the master clock 21 is loaded into the QX latch 19.

The timer latch 20 is updated by means of two registers in the register bank 22, the timer phase register and the timer frequency register. On every forth cycle of the master clock 21 the contents of the timer phase register and the timer frequency register are added together and the result is returned to the timer phase register at the same time the most significant bits of the result are loaded into the pipeline latch 27. On the next cycle of the master clock 21 the most significant bit of the pipeline latch 27 is loaded into the timer latch 20.

All of the registers in the register bank 22 can be loaded from the CPU interface 29. In normal use the transmit frequency register is set to generate the required transmission frequency. The phase slew and residual phase registers are set to produce the desired form of modulation. The transmitter phase accumulator is then controlled by the phase space processor as described above.

The receiver frequency register is set to the nominal receiver frequency and the quadrature phase shift register is set as specified above. The receiver phase register is then controlled by the phase space processor as described above. An external CPU then phase locks the receiver phase register to the received carrier signal in a manner detailed below by periodically adjusting the receiver frequency register.

The timer frequency register is set to a multiple of the received bit frequency and the timer phase register is controlled by the phase space processor as described above. An external CPU then phase locks the timer phase register to a multiple of the received bit frequency in a manner detailed below by periodically adjusting the timer phase register and the timer frequency register.

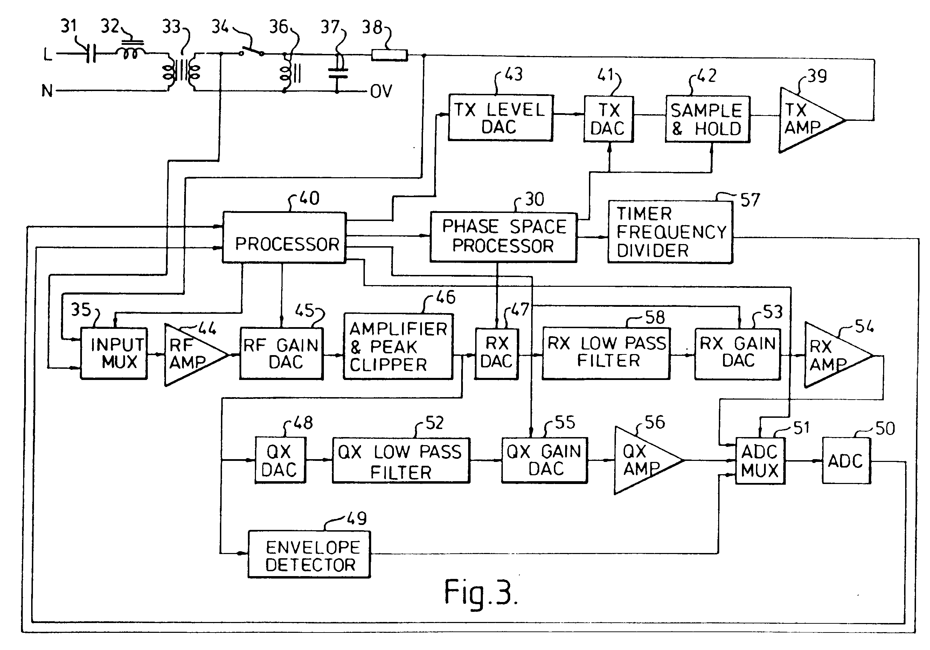

The mains transceiver depicted in Figure 3 is based on a phase space processor 30 as described above. The mains transceiver is coupled to the electrical power distribution network by means of the 50Hz blocking capacitor 31. The series inductor 32 forms a series tuned circuit in conjunction with the 50Hz blocking capacitor 31. The mains signalling transformer 33 provides galvanic isolation of the mains transceiver circuitry from the power distribution network. In the preferred embodiment of the present invention the inductor 32 is formed by the leakage inductance of the mains signalling transformer 33.

When the transceiver is used as a receiver the transmit relay 34 is opened. In this condition the 50Hz blocking capacitor 31 and the series inductor 32 form a wide band high impedance input to signals on the power distribution network in conjunction with the high input impedance of the input multiplexer 35.

When the transceiver is used as a transmitter the transmit relay is closed. The parallel inductor 36 and the parallel capacitor 37 form a doubly terminated forth order bandpass filter in conjunction with the 50HZ blocking capacitor 31 and the series inductor 32. This filter is terminated by the impedance of the power distribution network on one side and by the matching resistor 38 on the other.

Signals to be transmitted to the power distribution network are amplified by the TX amplifier 39 and are coupled to the power distribution network by the above described bandpass filter network. The output impedance of this driver network is thus relatively low and constant over the band of frequencies of interest.

The processor 40 instructs the phase space processor 30 to generate a phase modulated signal as has been described previously. It also provides the phase space processor 30 with the required data and data clock signals. The output of the phase space processor's 30 transmit latch 17 is fed to the data input of the TX DAC 41. The output of this TX DAC 41 is sampled by the sample and hold circuit 42 to remove spurious frequencies from the synthesized signal. The output of the sample and hold circuit 42 is fed to the TX amplifier 39. The processor 40 controls the reference level of the TX DAC 41 by means of the transmit level DAC 43. The processor 40 thus controls the level of the synthesized signal that is fed to the FX amplifier 39.

When the transceiver is acting as a receiver, signals on the power distribution network are coupled to the input multiplexer 35 as described above. The input multiplexer 35 feeds the received signal to the RF amplifier 44 which feeds the reference input of the RF gain DAC 45. The output of the RF gain DAC 45 is fed to the amplifier and peak clipper 46. The output of this amplifier and peak clipper 46 is fed to the RX DAC 47, the QX DAC 48 and the envelope detector 49. The output from the envelope detector 49 is fed to the Analog to Digital Converter (ADC) 50 via the ADC multiplexer 51.

The processor 40 is able to control the gain between the receiver input to the input multiplexer 35 and the envelope detector 49 by means of the RF gain DAC 45. The processor 40 measures the output of the envelope detector 49 by means of the ADC 50 and adjusts the digital input to the RF gain DAC 45 until the output of the envelope detector 49 is within predefined limits. These limits are set to ensure that the amplifier and peak clipper 46 only clips high amplitude transients received from the power distribution network. Subject to this limit is advantageous for the front end gain of the receiver to be as high as possible since the RX DAC 47 and the QX DAC 48 can accept inputs over the full power supply voltage range and a high front end gain reduces the effects of noise in the latter stages of the receiver.

The RX DAC 47 reference input is fed with an amplified version of the signal received from the power distribution network, the phase space processor 30 feeds a sampled data representation of a local oscillator signal to the data input of the RX DAC 47. The output of the RX DAC 47 is thus the product of the received signal with the local oscillator signal. In a similar manner the output of the QX DAC 48 is the product of the received signal with a 90° phase shifted version of the local oscillator signal.

The output of the RX DAC 47 is passed through the RX low pass filter 58 which removes the high frequency components of the RX DAC 47 output. Since an amplified version of the RX low pass filter 58 output is sampled by the ADC 50 prior to digital signal processing by the processor 40, the bandwidth of the RX low pass filter 58 is determined by the need for it to form an anti-aliasing filter for the ADC 50. The bandwidth must therefore be less than half of the ADC's 50 sampling rate. The QX low pass filter 52 acts in an identical manner on the output of the QX DAC 48.

The output of the RX low pass filter 58 is fed to the reference input of the RX gain DAC 53. The output of the RX gain DAC 53 is amplified by the RX amplifier 54 before feeding the ADC 50 via the ADC multiplexer 51. The processor 40 controls the digital input to the RX gain DAC 53. In this manner the processor is able to control the gain between the output of the RX low pass filter 58 and the ADC 50. The output of the QX low pass filter 52 is fed to the QX gain DAC 55 and thence to the OX amplifier 56 and the processor 40 uses these components to control the gain between the output of the QX DAC 48 and the ADC 50 is exactly the same manner. The digital inputs to the RX gain DAC 53 and QX gain DAC 56 are driven in parallel and thus the gain between the RX low pass filter 58 and the ADC 50 is always equal to the gain between the QX low pass filter 52 and the ADC 50.

The processor 40 sets the gain between the RX low pass filter 58 and the ADC 50 such that the outputs of the RX amplifier 54 and the QX amplifier 56 are not driven into saturation.

The output of the phase space processor's 30 timer latch 20 is fed to the timer frequency divider 57. The output of the timer frequency divider 57 which is at a multiple of the bit rate is fed to the processor 40 which uses this signal to schedule the sampling of the ADC 50.

The operation of the receiver can best be understood by first assuming that the receiver local oscillator is exactly in phase with one of the phases of a BPSK signal and that the output of the timer frequency divider 57 is exactly in phase with the bit period of the received signal. In each bit interval the analog input to the RX DAC 57 is either in phase with the digital local oscillator signal or exactly 180° out of the phase with it. The output of the RX DAC 47 is filtered by the RX low pass filter 53 to remove high frequency components and sampled by the ADC 50.

The processor 40 samples the output of the RX amplifier 54 many times in each bit period by selecting the output of the RX amplifier 54 with the ADC multiplexer 51 and initiating a conversion cycle of the ADC 50. These sampled values are then summed for each bit period to provide an estimate of the bit transmitted during that interval. For hard decision decoding the bit is estimated from the sign of the sum. For forward error correction with soft decision decoding the sums are mapped into a set of symbol metrics in the normal manner. Thus the system functions as a nearly ideal coherent receiver.

The means of achieving carrier synchronization will now be described. The processor 40 samples the outputs of the RX amplifier 54 and the QX amplifier 56 nearly simultaneously many times in each bit period by selecting the outputs of the RX amplifier 54 and the QX amplifier 56 with the ADC multiplexer 51 and initiating a conversion cycle of the ADC 50. The sampled value of the QX amplifier 56 is divided by the sampled value of the RX amplifier 54 and the quotient is then added to a running total of quotients and a linear combination of the instantaneous and running total of the quotients are added to the receiver frequency register of the phase space processor 30. By appropriately choosing the multipliers in the linear combination of summed and instantaneous values, it is possible to accurately approximate the behaviour of a second order phase locked loop of chosen bandwidth and damping factor. Thus the digital local oscillator signal is synchronised with the received signal.

Once the local oscillator has been phase locked to the received signal bit synchronization is acquired by examining the sampled values of the RX amplifier 54 and estimating the phase of any bit transitions. The timer is then phase locked to the bit transitions by adjusting the timer frequency register and the timer phase register in the phase space processor 30.

Since the processor 40 controls all the gains in the receiver and since it can measure the phase and quadrature components of any input signal, it is able to compute the magnitude and phase of a received signal. This facility is used during transmission to measure the input impedance of the mains coupling network when it is terminated by the power distribution network.

The processor 40 first selects the output of the TX amplifier 39 with the input multiplexer 35. It then measures the magnitude and phase of output of the TX amplifier as described above. It then selects the signal from the junction of the terminating resistor 38 and the parallel capacitor 37 and again measures the phase and magnitude of the received signal. If the value of the terminating resistor 38 is known, the processor can calculate the impedance presented by the coupling network. If the component values of the coupling network are known, the impedance of the power distribution network and therefore the voltage gain between the output of the TX amplifier 39 and the power distribution network can be calculated. The processor 40 is thus able to maintain the level of the signal on the power distribution network approximately constant over a wide range of impedance of the power distribution network.

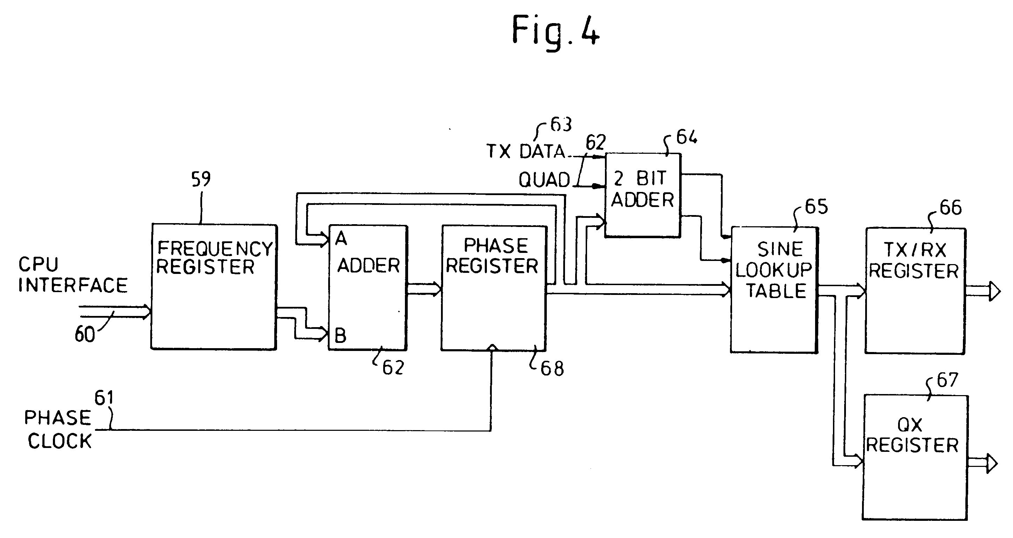

Where the transceiver is operated in half duplex and a BPSK transmission is used, it is possible to simplify the phase space processor. Figure 4 depicts such a simplified phase space processor.

Since it is not necessary to synthesise a modulated signal simultaneously with a local oscillator a single phase register 68 can serve to synthesise both signals. As before the desired frequency is entered into the frequency register 59 by means of the CPU interface 60. On each cycle of the phase clock 61, the contents of the phase register 68 is added to the frequency register 59 by means of the adder 62 and the result is returned to the phase register 68.

The two most significant bits of the phase register 68 are added to the quadrature input 62 with a weighting equal to the least significant of the two bits and to the TX data input 63 with a weighting equal to the most significant of the two bits by means of the two bit adder 64. The output of the two bit adder 64 is used as the most significant bits of the address to the sine lookup table 65. The remaining address bits of the sine lookup table 65 are the most significant bits of the phase register 68 excluding the two most significant bits of the register. The output of the sine lookup table 65 forms the input to the TX/RX register 66 and the QX register 67.

In operation, the frequency register 59 is loaded with a value appropriate to the desired carrier frequency. On each cycle of the phase clock 61 the output of the sine lookup table 65 when the quadrature input 62 is low is clocked into the TX/RX register 66 and the output of the sine lookup table 65 when the quadrature input 62 is high is clocked into the QX register 67. In this manner both the phase and quadrature signals are derived from the phase register 68.

Whilst operating as a transmitter the frequency register 59 is loaded with a value appropriate to the desired transmitter carrier frequency and the TX data input 63 shifts the phase of the input to the sine lookup table 65 by the 180° to produce BPSK signalling. The output of the TX/RX register 66 is fed to the TX DAC 41 and the RX DAC 47 and the output of the QX register 67 is fed to the QX DAC 48. In this manner not only are the necessary BPSK signals generated, the phase and magnitude of the signals at the input to the input multiplexer 35 can be measured.

Whilst operating as a receiver the frequency register 59 is loaded with a value appropriate to the desired receiver frequency. The TX data line 63 is maintained in a constant state and the output of the TX/RX register 66 is fed to the RX DAC 47 and the output of the QX register 67 is fed to the QX DAC 48. The frequency register 59 is adjusted to phase lock the phase register 68 to the received carrier frequency as has been discussed previously. The adder 62 can of course be used to maintain a bit timer as previously described.

As a further refinement the TX DAC 41 and the RX DAC 47 can be combined by the addition of extra multiplexer circuits. In this embodiment the phase and quadrature components of the receiver input are measured sequentially by first updating the QX register 67 in phase with the TX/RX register 66 to measure the in phase component and the updating of the QX register 67 in quadrature with the TX/RX register 66 to measure the quadrature component.

The transmit relay 34 can be replaced by electronic means of switching and a simulated resonant circuit used in place of the parallel resonant circuit formed by the inductor 36 and capacitor 37. These components along with the TX amplifier 39 can then be integrated into a single custom integrated circuit. Similarly the implementation of the carrier and bit timing phase locked loops and the modulation and demodulation functions can be achieved in a single custom integrated circuit.

One of the most important applications of coupling of signals to an electrical power distribution network is in electricity supply metering. The transmission of information to and from a particular substation is handled in an isochronous manner and operates as follows.

The equipment in the substations will establish the bit timing of all the meters with which it is in communication.

The meter will acquire the bit timing of the transmissions from the substation. The bit timing of transmissions from the substation will be preserved from one transmission to the next. Thus the meter will not need to re-establish bit timing for each message from the substation but will be able to reply on the timing information established for earlier transmissions.

The meter will reply to the substation with its bit timing synchronised to the bit timing derived from the transmissions from the substation. Since the group delay from the substation to the meter and back is much less than the bit period, the substation can use the bit timing of its own transmission as an accurate estimate of the bit timing of the transmission from the meter.

In this manner the bit timing of all transmissions will occur at very nearly the same instant of time relative to the bit period of the substation; hence the term "isochronous" transmission. This form of transmission ensures that no time need be wasted to re-establish bit timing on line turn around. It also allows the bit timing of messages to be averaged over a long period of time since it is not necessary to acquire bit timing for each message. This requires that the receiver is able to maintain its estimate of the bit timing from one message to the next. In the preferred embodiment the maintenance of bit timing is one of the functions of the phase space processor.

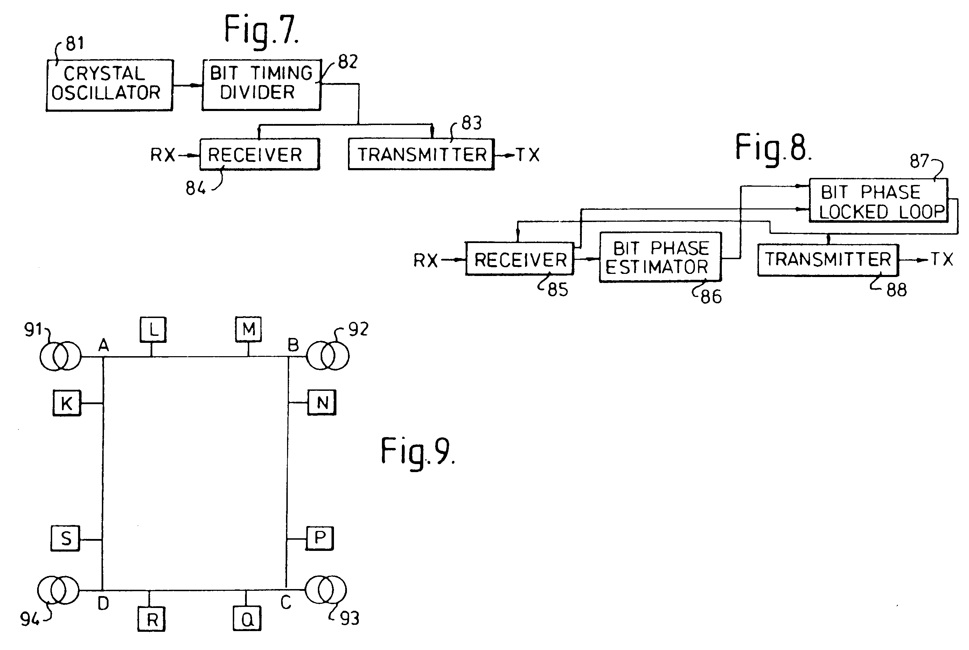

A master station depicted in Figure 7 operates in the following manner:

The master station maintains its bit timing by means of a crystal controlled oscillator 81 which is divided down to the desired bit rate by the bit timing divider 82. The master need never adjust its bit timing in response to received messages since they are always in synchronism with its transmit bit timing. The master never alters the phase of the bit timing divider 82 and always ensures that its transmissions are sent in synchronism with this bit timing divider 82 by clocking the transmitter circuit 83 with the output of the bit timing divider 82. The master station receives messages with the receiver 84 bit timing derived from the output of the bit timing divider 82.

A remote station depicted in Figure 8 operates in the following manner:

The receiver 85 demodulates the received signal and passes the recovered signal to the bit phase estimator 86. The bit phase estimator 86 forms an instantaneous estimate of the bit phase of the received signal which it passes to the bit phase locked loop 87. The bit phase locked loop 87 acquires phase lock with the bit timing of the received signal. Once bit phase lock has been achieved the bandwidth of the bit phase locked loop 87 can be reduced since the phase of the bit timing of every received message is identical. The bit phase locked loop 87 provides a bit clock for data extraction by the receiver 85 and a clock for the bit timing of the transmitter 88. The receiver 85 informs the bit phase locked loop 77 when a carrier is received. In the absence of a received carrier the bit phase locked loop 87 maintains its frequency.

The system operates as follows: initially the bit phase locked loop 87 operates with a relatively wide bandwidth to speed up the acquisition of the bit timing from the received signal. Once the bit phase locked loop 87 has locked onto the bit timing of the received signal its loop bandwidth is reduced to increase the accuracy of bit tracking. For each subsequent message that is received the bit timing of the receiver is already very accurately matched to the bit timing of the received signal since the bit timing of all transmitted signals is maintained by the master polling station. In the absence of a received signal the frequency of the bit phase locked loop 87 is maintained.

The length of time that the receiver can maintain approximately phase lock with the master transmitter in the absence of received signals depends upon the stability of the bit timing of the master transmitter, the accuracy of frequency acquisition by the bit phase locked loop 87 and the stability of the bit phase locked loop in the absence of a received signal. If digital techniques are used, a bit phase lock can be maintained for periods in excess of an hour in the absence of received signals. The system can be advantageously combined with data directed methods of carrier phase extraction since the bit phase is available at the start of carrier acquisition.

When the remote station transmits to the master polling station the transmitter 88 is clocked by the bit phase locked loop 88. Since the bit phase locked loop 88 is automatically locked to the received signal and hence to the master polling station bit timing divider 82, the bit timing of the remote station transmitter 88 is automatically in phase with the master polling station receiver 84.

As illustrated in Figure 9, the plurality of data collection systems operate in the following manner: a data collection system at each of the four substations polls the adjacent meters on a separate frequency and the adjacent meters receive on that same frequency. Thus messages originating from substation A are received by meters K and L but are ignored by all other meters.

In the event of a failure of the data collection system at any of the substations, the meters adjacent to the substation can detect the loss of transmission from the substation and log on to the next nearest substation. Thus if substation A were to fail, meter L could log on to substation B and meter K could log on to substation D. This provides a degree of redundancy in the operation of the data collection system.

Since all four data collection systems operate independently the effective data rate on the network is four times that of an individual data collection system.

In practice the interconnections between substations are complicated and change from time to time so that some method is needed to ensure that individual meters choose the most suitable data collection system. This choice can readily be made by the meter on the basis of the received signal strength from each of the available substations. The substation with the highest signal strength is likely to offer the lowest error rate for data transmission and can safely be chosen by the meter.

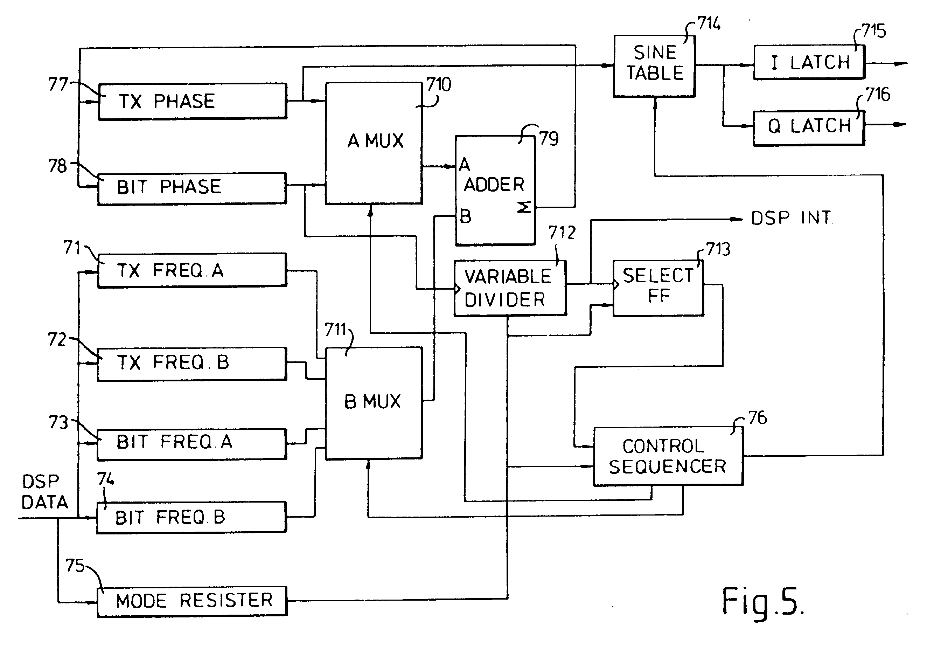

The phase space processor depicted in Figure 5 operates in the following manner to produce a complex phase modulated signal.

An external digital signal processor (DSP) loads the transmit frequency A register 71, the transmit frequency B register 72, the bit frequency A register 73, the bit frequency B register 74 and the mode register 75. The control sequencer 76 alternately adds one of the transmit frequency A register 71 or the transmit frequency B register 72 to the transmit phase register 77 and one of the bit frequency A register 73 or the bit frequency B register 74 to the bit phase register 78 by means of the adder 79, the A multiplexor 710 and the B multiplexor 711.

The control sequencer 76 selects between adding the bit frequency A register 73 and the bit frequency B register 74 to the bit phase register 78 according to two bits in the mode register 75. One of these bits selects the normal source register and the other bit, if set, selects the other source register for a single addition cycle. This allows the bit phase register 78 to execute phase jumps. If a constant is added to the bit phase register 78 in each processing cycle the bit phase advances at a constant rate in each cycle thus providing a constant bit frequency. The most significant bit of the bit phase register 78 is used to clock the variable divider 712. The variable divider 712 division ratio is set by the mode register 75. The variable divider 712 is used to increase the resolution of the bit frequency generator since the carrier frequency is typically much higher than the bit frequency.

The control sequencer 76 selects between adding the transmit frequency A register 71 and the transmit frequency B register 72 to the transmit phase register 77 according to two bits in the mode register 75 and the output of the selection bistable 713. One bit is exclusive ored with the selection bistable 713 and the result is used to select the source register, the second bit, if set, inverts the source register for a single addition cycle. This allows the transmit phase register 77 to execute phase jumps.

After each addition cycle to the transmit phase register 77, the most significant bits of the transmit phase register 77 are fed to the sine lookup table 714. The sine lookup table 714 provides a digital representation of the cosine of the phase of the transmit phase register 77 which is loaded into the I latch 715 and minus the sine of the phase which is loaded into the Q latch 716 under the control of the control sequencer 76.

The PSP generates complex continuous phase modulations in the following manner :

The mode register 75 sets up a suitable division ratio for the variable divider 712, selects the bit frequency A register 73 for addition to the bit phase register 78 and enables the selection bistable 713 to change state each time the variable divider 712 overflows.

The bit frequency A register 73 is loaded with a number such that the variable divider 712 overflows at a multiple of the desired bit rate. Each time the variable divider 712 overflows the selection bistable 713 changes state and the DSP is triggered to update the contents of either the transmit frequency A register 71 or the transmit frequency B register 72, whichever is currently not being added to the transmit phase register 77. Each time the selection bistable 713 changes state the transmit frequency A register 71 and the transmit frequency B register 72 change roles, one is added to the transmit phase register 77 on each processing cycle and the other is loaded with new data from the DSP.

If the DSP loads the new transmit frequency data before the variable divider 712 next overflows, the PSP updates the transmit phase register 77 at a succession of constant rates, thus providing a piecewise linear phase modulation of the transmit phase register 77. The sine lookup table 714 converts the phase of the transmit phase register 77 to a digital representation of two sine waves in phase quadrature which are loaded into the I latch 715 and the Q latch 716.

It should be noted that the PSP derives both bit and carrier timing from the same master clock frequency and that there is no requirement that the bit and carrier frequency should bear any relationship to the master clock frequency except that their ratio should be a rational number capable of being represented by the word
length of the transmit phase register 77 and the bit phase register 78.

The PSP can be extended to approximate higher order derivatives by using the present transmit phase register 77 as the frequency input to an additional phase register and using this as the frequency input to an additional phase register and so on.

The PSP can also be used to generate a digital representation of a local oscillator with quadrature outputs for partially coherent demodulatlon of phase modulated signals. The PSP operates as receiver by phase locking the transmit phase register 77 and the bit phase register 78 to the incoming signal. The phase of these registers can either be controlled by modulating the corresponding frequency register or by bumping the phase of the oscillators in the manner that has previously been described.

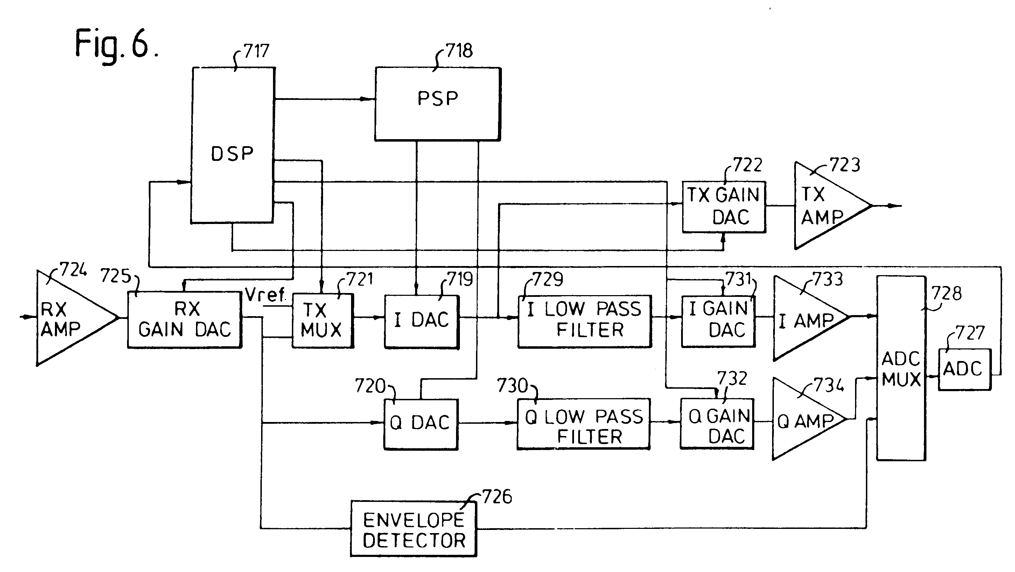

The phase transceiver depicted in Figure 6 operates in the following manner. In transmit mode the DSP 717 drives the PSP 718 as described above. The output of the I latch 715 is fed to the I DAC 719 and the output of the Q latch 716 is fed to the Q DAC 720 which are multiplying digital to analog converters (DACs). The DSP 717 selects a reference voltage as an input to the I DAC 719 by means of the TX multiplexor 721. The output of the I DAC 719 is fed to the TX gain DAC 722, which enables the DSP 717 to control the level of the transmitted signal. The TX gain DAC 722 drives the TX amplifier 723 which buffers the signal for transmission.

In recieve mode the received signal is amplified by the RX amplifier 724 and is then fed to the RX gain DAC 725 which feeds the I DAC 719 via the TX multiplexor 721, the Q DAC 720 and the envelope detector 726. The output of the envelope detector 726 is fed to the analog to digital converter (ADC) 727 via the ADC multiplexor 728. The DSP 717 adjusts the gain of the RX gain DAC 725 by observing the output of the envelope detector with the ADC 727 and maintaining the output of the envelope detector 726 at a constant level such that a front end gain is maximised, but the signal is not clipped except during any short duration impulse noise spikes.

The outputs of the I DAC 719 and the Q DAC 720 are fed to the I low pass filter 729 and the Q low pass filter 730 respectively. These low pass filters remove the unwanted high frequency components from the outputs of the I DAC 719 and the Q DAC 720. The outputs of the I low pass filter 729 and the Q low pass filter 730 are fed to the I gain DAC 731 and the Q gain DAC 732 respectively. The outputs of the I gain DAC 731 and the Q gain DAC 732 are fed via the I amplifier 733 and the Q amplifier 734 respectively to the ADC multiplexor 728.

The DSP 717 adjusts the gain of the I gain DAC 731 and the Q gain DAC 732 such that the outputs from the I amplifier 733 and the Q amplifier 734 are as large as possible without exceeding the input range of the ADC 727.

The DSP 717 sets the active transmit frequency register in the PSP 718 to the nominal centre frequency of the desired channel and the active bit frequency register and the division ratio of the variable divider 712 such that the selection bistable 713 interrupts the DSP 717 at a multiple of the desired bit frequency. The DSP 717 then observes the outputs of the I amplifier 733 and the Q amplifier 733 and the Q amplifier 734 with the ADC 727 and forms an estimate of the carrier and bit phase. The carrier phase is adjusted by writing to the alternate transmit frequency register and inverting the transmit frequency register selection bit in the mode register 75. The bit phase can be adjusted in a similar manner or by bumping the phase of the bit phase register 78 in the manner that has previously been described.

Once bit and carrier synchronization have been achived the DSP 717 demodulates the received signal by processing the succession of sampled values from the 71 amplifier 733 and the Q amplifier 734 in a manner that is dependent upon the precise modulation and coding system in use.

It should be noted that the DSP 717 can be inplemented with a general purpose programmable processor or by means of a dedicated sequential logic. In the preferred embodiment all elements of the phase transceiver are integrated on a single monolithic integrated circuit.

## Claims

1. A method of coordinating the transmission of polling messages from a low voltage distribution substation and the responses from a plurality of electricity meters communicating over the low voltage distribution network characterised in that the precise phase of the data bit timing of transmitted polling messages from the substation is preserved between transmissions and the response from electricity meters maintains the phase of the data bit timing of the messages from the substation in its own transmissions.

## Patentansprüche

1. Verfahren zum Koordinieren des Sendens von Abrufnachrichten von einer Niederspannungs-VerteilungsunterstatiOn und der Antworten von mehreren Elektrizitätsmeßgeräten, die über das Niederspannungs-Stromversorgungsnetz kommunizieren, dadurch gekennzeichnet, daß die präzise Phase des Datenbit-Zeitverlaufs von von der Unterstation gesendeten Abtragenachrichten zwischen Übertragungen beibehalten wird und die Antwort der Elektrizitätsmeßgeräte die Phase des Datenbit-Zeitverlaufs der Nachrichten von der Unterstation in ihren eigenen Übertragungen aufrechterhält.

## Revendications

1. Procédé pour coordonner la transmission de messages d'interrogation provenant d'une sous-station de distribution basse tension et les réponses provenant d'une pluralité de compteurs d'électricité communiquant à travers le réseau de distribution basse tension, caractérisé en ce que la phase précise du rythme de données des messages d'interrogation transmis par la sous-station est préservée entre les transmissions, et la réponse provenant des compteurs d'électricité maintient la phase du rythme de données des messages provenant de la sous-station dans ses propres transmissions.
